# EUROPEAN PATENT APPLICATION

(11) **EP 1 265 140 A2**
(43) Date of publication of application: **11.12.2002**
(21) Application number: 02252286.6
(22) Date of filing: 28.03.2002
(51) Int. Cl.: G06F 11/14

(54) **Switching between a base-host and a back-up host in a distributed database management system**

(30) Priority: 30.03.2001 JP 2001102169
(71) Applicant: Kabushiki Kaisha Toshiba, Tokyo 105-8001 (JP)
(72) Inventor: Kamimura, Shuichi, c/o Kabushiki Kaisha Toshiba, Tokyo (JP); Fujihara, Mutsumi, c/o Kabushiki Kaisha Toshiba, Tokyo (JP)
(74) Representative: Midgley, Jonathan Lee

(57) **Abstract**

A database-management system easy for system integration and flexible to functional alteration, etc., is provided. In a database-management system, a database is stored in each main-memory of a plurality of computers connected via a network. A computer storing original data of at least piece of data of the database is an original host. At least one another computer storing replica data of the original data is a replica host. A definer defines system-administration information on at least a piece of data to be subjected to base-host switching, a base host storing the data and the location of the base host. A storage stores the system-administration information. A base-switching controller controls the base-host switching based on the system-administration information. A transcription manager performs communications on information on the base-host switching among the computers.

## Description

### BACKGROUND OF THE INVENTION

The present invention relates to a database system constructed on a computer main-memory area. Particularly, this invention relates to a distributed data-processing database-management system constructed on the Internet or intranets, with a database-managing function and also other several functions such as transaction management and distributed system administration for backups, recovery from faults and load distribution.

Database systems for real-time monitoring and controlling of data shared by computers distributed over a network have to process (search and update) a huge amount of data at a high speed. Such database performance thus depends on data-management systems that provide a means of accessing those data. Enhanced data-management systems could manage all data on a main-memory area, which are usually stored on an external storage device such as a hard disk. Increased storage capacity for main memories has allowed all data to remain in a main-memory area as resident data even in the present hardware environments.

Mere caching of a data-managing system on a main-memory area to known external storage devices cannot achieve high performance for real-time applications. There are two reasons for such a drawback: (a) a huge amount of data has to be transferred between an application and a data-managing system; and (b) execution of algorisms designed for external storage devices on a main-memory area of each computer cannot achieve high performance. In addition, limited functions of such algorithms designed for external storage devices and provided by a data-managing system cannot lighten loads for development of applications, nonetheless achieving high-speed processing a little bit.

There are a lot of demands for high reliability on systems running 24 hours for 365 days. These systems mostly have a redundant structure because system down is not allowed for them no matter what happens. Middleware (MW) and hardware (HW) that support such highly reliable functions have to be controlled by application software. This requires achievement of such highly reliable functions and also accessibility to data structure, which results in low application quality due to application complexity with bugs to a highly reliable redundant structure.

Such type of database is not flexible to modifications to or extension of functions during the system development because initial data format could not be available for such modifications or extension. The database structure must be changed for such demands, which however requires a system halt. Moreover, functional modifications after that the system is running cost a lot due to a system halt. The system halt for functional modifications causes low maintainability.

The known database-management system employs a client/server architecture in which one server holds and manages original data due to difficulty in management of the identical data shared by several machines distributed in a network. However, any troubles occurred to the server at which original data is resident forces other machines in the network to stop their operations.

There is thus strong demands for any means for easy settings of a database-management system with high data-accuracy achieving means which does not force several machines in the network to stop their operations even if a trouble occur to a machine at which original data is resident.

### SUMMARY OF THE INVENTION

In order to solve the problems discussed above, a purpose of the present invention is to provide a base-host switching database management system with easy system integration and high flexibility to functional modifications.

In detail, the present system allows only the computer (base host) storing an original database for data updating to maintain data uniformity over the several computers. It is required that the original site be switched for the system to run for a long time with no halt. The present invention switches the base host from a computer to another computer to catch up the latest database contents for looking up and updating.

A database-management system comprising at least two computers connected via a network, the computers having main-memory areas storing databases, each database having at least a piece of data, either of the computers being designated as an original host for storing the original of the data, the other computer being designated as a replica host for storing replica of the data, according to an embodiment of the present invention, each computer including. a definer configured to define system-administration information on at least a piece of data to be subjected to base-host switching, a base host storing the data, and the location of the base host; a storage configured to store the system-administration information; a base-switching controller configured to control the base-host switching based on the system-administration information; and a transcription manager configured to perform communications on information on the base-host switching among the computers.

A database-management method for managing databases provided for at least two computers connected via a network, the computers having main-memory areas storing databases, each database having at least a piece of data, according to an embodiment of the present invention, the method comprising: designating either of the computers as an original host for storing the original of the data; designating the other computer as a replica host for storing replica of the data; defining system-administration information on at least a piece of data to be subjected to base-host switching, a base host for the data, and the location of the base host; and switching the base host storing the data to be subjected to base-host switching to another computer.

A computer readable medium containing a database-management program for managing database for at least two computers connected via a network for database management, the computers having main-memory areas storing databases, each database having at least a piece of data, either of the computers being designated as an original host for storing the original of the data, the other computer being designated as a replica host for storing replica of the data, information on data updating performed at the original host being reflected on the replica host to maintain data equivalence over the computers, according to an embodiment of the present invention, the program having instructions for: defining system-administration information on at least a piece of data to be subjected to base-host switching, a base host for the data, and the location of the base host; and switching the base host storing the data to be subjected to base-host switching to another computer.

### BRIEF DESCRIPTION OF DRAWINGS

FIG. 1 shows a functional block diagram indicating the overall architecture of a base-host switching database-management system according to embodiments of the present invention;
FIG. 2 shows a block diagram indicating the architecture of each host in the database-management system shown in FIG. 1;
FIG. 3 is a flowchart showing a setting procedure for the database-management system in FIG. 1;
FIG. 4 is a flowchart showing procedures of executing applications and transactions for the database-management system in FIG. 1;
FIG. 5 is a block diagram of a base-host switching processor 15 in the database-management system in FIG. 1;
FIG. 6 is a flowchart showing the former part of a base-host switching procedure when the base host holding the system-administration lexicon set is the host for originating function execution;
FIG. 7 is a flowchart showing the latter part of the base-host switching procedure when the base host holding the system-administration lexicon set is the host for originating function execution;
FIG. 8 is a flowchart showing the former part of a base-host switching procedure when a new base host is the host for originating function execution;
FIG. 9 is a flowchart showing the latter part of the base-host switching procedure when the new base host is the host originating function execution;
FIG. 10 is a flowchart showing the former part of a base-host switching procedure when an old base host is the host for originating function execution; and
FIG. 11 is a flowchart showing the latter part of the base-host switching procedure when the old base host is the host originating function execution.

### DETAILED DESCRIPTION OF EMBODIMENT

An embodiment according to the present invention will be disclosed with reference to the attached drawings.

In the present invention, data processing included in the embodiment disclosed later is achieved by software running on a computer. Such software makes computer hardware active to fulfill the purposes of the present invention. Several known techniques are included in the present invention. The embodiment will be disclosed with reference to circuit blocks representing several functions achieved by hardware or software which are changeable.

### [1. Overall Picture of Distributed Data-Management System]

The present invention relates a distributed data-management system for adequately and efficiently managing databases provided on several machines connected via a network.

A distributed data-management system (called the present system hereinafter) according to the present invention is explained briefly before the detail disclosure.

The present system handles databases (lexicon sets) and transactions. In detail, the present system receives requests for operations such as database looking-up, searching and updating as transactions from applications (users) and executes the transactions with no faults, and also sends notifications of execution completed and results of execution to the applications.

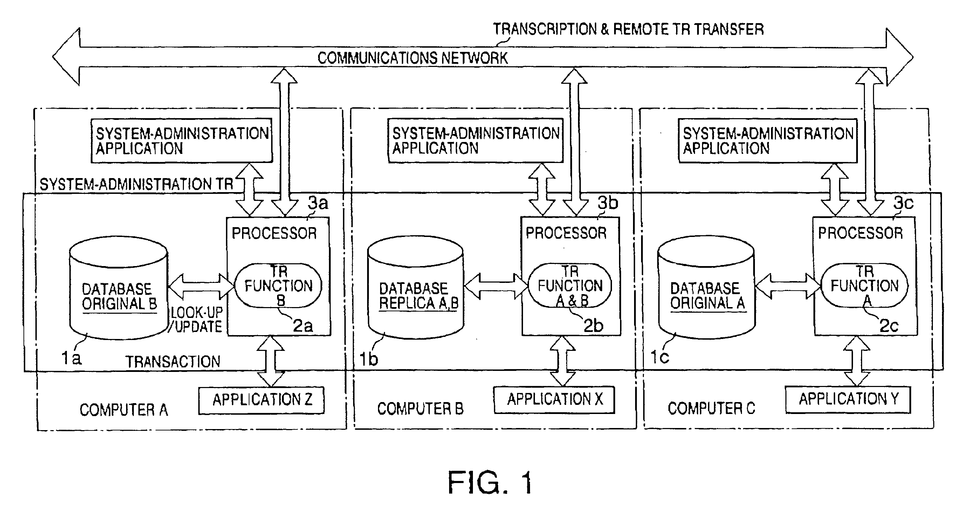

FIG. 1 shows the configuration of a distributed-processing database-management system according to embodiments of the present invention.

The present system includes several computers A, B, C, ... (each being called a host), as shown in FIG. 1, connected via a communications network. Provided in main-memory areas of the hosts A, B and C are databases 1a, 1b and 1c, respectively, and also transaction (TR) functions 2a, 2b and 2c, respectively, used for accessing the corresponding databases.

One or more of applications will run on each host. However, different applications will mostly run on hosts when the present system includes several hosts. In detail, each of applications X, Y and 2 provided outside the present system accesses the database of the corresponding host for necessary processing. More precisely, each of the applications X, Y and Z requests the corresponding transaction function 2a, 2b or 2c pre-registered in the present system via the corresponding processor 3a, 3b or 3c for procedures such as looking-up and updating. On receiving the processing results, each application performs a necessary procedure for execution of programs in addition to accessing the corresponding database. Usually, the applications X, Y and z perform front-end procedure such as displaying on monitor screen and printing.

### (Database)

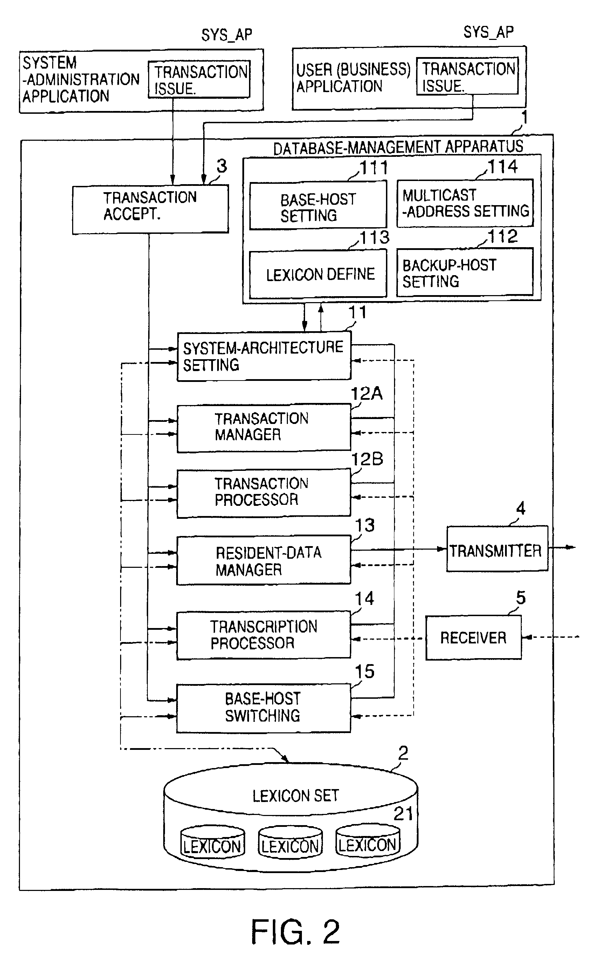

Each of the databases 1a, 1b and 1c in the present system includes one or more of lexicons. A lexicon is a unit for selective accessing data in a lexicon set or giving attributes to the data. Lexicons are discriminated from each other by their (lexicon) names. Lexicon sets are also discriminated from each other by their (lexicon-set) names because a uni-space can contain several lexicon sets, as shown in FIG. 2, in the environment for executing the present system. Several uni-spaces are also discriminated from each other by their (uni-space) names because the present system can be structured as several systems for managing several uni-spaces, or several different lexicon sets, via a shared network on a physical machine.

The original data of a lexicon set is stored in the database of one of several hosts in the network, and its replica data are stored at the other hosts. For example, in FIG. 1, the original data for data B has been stored at the host A (computer A), and that for data A has been stored at the host C (computer C). The replica data for the data A and B have been stored at the host B (computer B). The data-updating procedure can be allowed to the original data only, not to the replica data in the present system.

### (Transaction)

An abstracted/generalized procedure for an operation to be performed by a transaction is called a "transaction function". Transaction functions (TR functions) A and B shown in FIG. 1 are used to access the database of the corresponding machine for realization of a necessary procedure shared by the applications X, Y and Z. In other words, the applications X, Y and Z do not directly access the corresponding databases but via the corresponding transaction functions in the present system.

A transaction includes identifiers (such as a transaction name) for giving data several types of attributes. A transaction function to be executed may be set so that it corresponds to the identifiers. A necessary number of identifiers can be prepared in accordance with the types of attributes to be given.

A transaction can handle only one lexicon set in the present invention. A uni-space can include several lexicon sets, so that a lexicon-set name to be operated is stated in a transaction. The lexicon-set name may be one of the identifiers. Statement of a lexicon-set name in a transaction is not a must because a lexicon set to be operated can be found by using another identifier.

The present system processes a data-operation request from an application per transaction. The updating procedure to the original data is also executed per updating TR. Moreover, a necessary procedure to the replica data is executed at a replica site per original updating TR so that the replica data can reflect changes in the original data due to the updating procedure with the function called "retriever", which will be explained later.

### (Major Purpose of the Present System)

The major purpose of the present system is to maintain databases (lexicon sets) as containing identical contents over several machines. In detail, several machines hold duplicates of a database, and when a database at one machine has been updated, the updated information (the contents of updating) is transmitted to the other machines via a communications network so that the databases at the other machines can reflect the updating, to fulfill the purpose. This function is called "transcription" in the present invention. Data transmitted by the function "transcription" is called "transcribed" data in the present invention.

A machine that is authorized to update a database is called an original site for the database and data in the database is called an original data in the present invention. Other machines that hold duplicates of that database are called replica sites and data in each duplicate of the database is called replica data in the present invention.

The present system executes a transaction (updating TR) for updating a database at the original site. With the function "transcription", the system further handles several duplicate databases as logically seen as one database from the application of each machine. The application of each machine therefore does not need to know about which machine is the original site. This system configuration is called "remote/local architecture" in the present invention.

In the present system, until a unit of execution of a transaction and a necessary procedure to replica data so that it can reflect changes in "transcribed" data has been completed for a database (lexicon set), another transaction procedure (and also a procedure on another "transcribed" data) for the database will not be executed. In other words, another transaction procedure and a procedure on another "transcribed" data have to wait for the completion of all the execution described above.

In other words, a transaction procedure and a procedure on "transcribed" data for one database (lexicon set) of one machine are serially executed per transaction. Therefore, an application that has requested a transaction will not access a database to which another transaction is running.

A transaction for data searching and looking-up only with no updating procedure is called a looking-up transaction in relation to an updating transaction. The function "transcription" in the present system achieves quick matching between original data and replica data per transaction. This allows a look-up transaction to operate the replica data of a machine (local machine) that has been requested for the transaction.

The communications network in the present system is a means of achieving the function "transcription" in which an original site transmits "transcribed" data to replica sites. It is also a means of transmitting an updating transaction issued (requested) at a replica site to the original site. The function of executing the updating transaction at an original site is achieved by transmitting the updating transaction issued at a replica site to the original site via the communications network.

### [Definition of Technical Terms]

Meaning of several technical terms used in this specification will be explained before disclosure of the embodiment.

### (1) Uni-Space (shared unit area/database-running unit area)

The present system runs over several machines (hosts) connected via a network for maintaining and updating data shared by main memories of the several machines. The term "uni-space" in the present system is an identifier for discriminating data from each other shared by the several machines of the present system and also discriminating data-access (looking up, updating) services from each other. The identifier is used for discrimination of server groups in which servers communicate with each other. It is also used when an application requests a server for a service to access data shared by several servers. The identifier "uni-space" is constituted by several ASCII characters and a set of IP multicast addresses used for group-to-group communications.

### (2) Lexicon Set

A subset of uni-space data is called a lexicon set. It is possible to decide whether or not to provide data per lexicon set to machines, each constituting a main-memory area. The present system is capable of storing main-memory data into files as backup data per lexicon set.

A lexicon set has an indexing function for high-speed accessing to data (called shared data hereinafter). Listed below are basic data-structures for a lexicon set.
(a) LEXICON: a subset of a lexicon set, belonging to a lexicon set;
(b) CELL: data-storing array, having attributes of type (data type), capacity (length of alignment) and count (effective length as a key for sorting), belonging to a lexicon set;
(c) CONTEXT: data (CELL array) for giving CELLs a linear relation, having an attribute of capacity, belonging to a lexicon set;
(d) ROW: data for appointing a sort key for a part of CONTEXT, having attributes of row length and key length, belonging to a lexicon set; and
(e) FACADE: data for sorting ROW for data searching, a main element for the indexing function, belonging to a lexicon set.

### (3) Transaction

Transaction is a function of looking-up and updating shared data when receiving a request from an application belonging to a uni-space service. A set of data operated by a transaction at once is one lexicon set only. For updating shared data by using transactions in the present system, data-updating is executed at a specific site (called a base host or an original site hereinafter) at which an original data exits, and then the updated results ("transcribed" data) are multicast to other sites belonging to a uni-space for the specific site for maintaining data consistency. The base site can be appointed per lexicon set.

Transactions issued by applications are classified into (a) local looking-up, (b) local updating and (c) remote updating, in the present invention.

### (a) Local Looking-Up

This transaction operation is allowed only look up shared data, executed as accessing to completely local main-memory data, with no network traffic. In other words, data is only looked up by this transaction with no updating so that access is made always to main-memory data of the self-site to which the transaction has been issued regardless of the self-site being an original site or a replica site.

### (b) Local Updating

This is for an original site at which an application has issued a transaction. This function allows the original site to update data, and then to multicast the updated data to other sites so that several hosts can always use the identical data.

### (c) Remote Updating

This is for each replica site at which an application has issued a transaction. This function does not allow the replica site to update data directly because it is a replica data. The transaction is transmitted to a base host for data updating. "Transcribed" data is transmitted by the function "transcription" so that every host can always use the identical data. Replica sites with no such application that has issued this transaction can receive "transcribed" data from the base host. This allows every host to always use the identical data.

Discrimination between (b) local updating and (c) remote updating depends on whether a base host is a site to receive a transaction. The halt timing for (b) local updating is at a moment of local main-memory data-updating. The halt timing for (c) remote updating is at a moment at which local data reflects the updating in "transcribed" data received after data has been updated with transmission of a transaction to a base host.

Discrimination between (b) local updating and (c) remote updating is made in the present system with no relation to applications.

### (4) Retriever

"Retriever" is a function of handling original or replica data at a host so that it makes the system available when the system has just started or lexicon-set data is stored in a main-memory area, all (original or replica) lexicon-set data being transmitted to this host from other hosts via a network. A list of hosts to which a "retriever" request will be sent can be provided. A "retriever" request is sent to hosts on the list in accordance with a predetermined protocol. A list can be decided in accordance with original- and replica-host allocation, network bandwidth and machine specification, etc., for adequate settings to the system configuration.

Data is usually provided to each host via a network, however, it can be loaded from files when the system has just started in case of failure of "retriever" from the network, and it can also be loaded from files before "retriever" from the network.

Data are usually offered to each host via the network. In system start-up, however, data can be loaded from files.

### (5) Transcription

"Transcription" is a function of transmitting data updated by updating transaction to other machines from a specific machine by multicasting. In detail, an updating transaction is executed at an original host and only the updated data are transmitted to replica hosts by multicasting. On receiving the updated data, the replica hosts perform a necessary procedure so that replica data can reflect the updating.

### (6) Backup

A backup function is to store the contents of lexicon set in secondary storage devices. The backup function to secondary storage devices can be set as an option (which can be set anytime), so that the system configuration can be modified in accordance with required throughput and reliability. The data stored by the backup function will be used for system startup or recovery from faults. The backup function to secondary storage devices is executed asynchronous with transaction procedure for high-speed main-memory data management with no decrease in transaction throughput.

### (7) Technical Terms for Sites in Network

Local site: self-site
Remote site: other sites
Original site: a site holding original data
Replica site: sites holding replica (duplicate) data

### [3. Host Architecture ... FIG. 2]

Disclosed next is the architecture of each host with reference to FIG. 2.

A database-management apparatus 1 is provided in the main-memory area of each host. The management apparatus 1 is equipped with several processing and setting sections and a database called a lexicon set 2 for achieving these processing and settings. It is also equipped with a transaction-accepting section 3 which is a contact point or reception for system administration and business applications, and also a transmitter 4 and a receiver 5 for connecting each host to a network.

The management apparatus 1 is provided with several processing and setting sections as follows:

### (1) System-Configuration Setting Section 11

The system-configuration setting section 11 has a base-host setting section 111, a backup-host setting section 112, a lexicon-defining section 113 and a multicast-address setting section 114.

The base-host setting section 111 defines as to which host among several host stores original data, or which host in a network stores a lexicon-set base (original). The backup-host setting section 112 provides one or more backup hosts to each base host while the system is running. The lexicon-defining section 113 decides lexicons that belong to a lexicon set defined by the base-host setting section 111. The multicast-address setting section 114 sets a default multi-address as a parameter for system startup or a multi-address different from the default for each lexicon set.

### (2) Transaction Manager 12A

The transaction manager 12A defines a transaction used by an application and also a transaction function executed by the transaction. It also defines the relationship between the transaction function and lexicons to be accessed by the transaction function.

### (3) Transaction processor 12B

On receiving a transaction-execution request from an application in accordance with settings done by the transaction manager 12A, the transaction processor 12B selects a transaction function corresponding to the requested transaction and performs looking-up, updating and searching procedure to data in lexicon sets by using the selected transaction function.

### (4) Resident-data Manager 13

The resident-data manager 13 performs settings as to which lexicon sets remain at each host, or which lexicon sets are accessible to business applications at each host. While the system is running, the resident-data manager 13 performs the function "retriever" for taking necessary data from a base host to replica sites and a resident-data state-changing procedure so that a new lexicon set remains resident at a specific host or a lexicon set having remained resident at a specific host is released therefrom.

### (5) "Transcription" Processor 14

The "transcription" processor 14 performs the function "transcription" to maintain data uniformity between a base host and replica sites already set by the system-configuration setting section 11. In detail, a business application has access to data via transactions classified into "looking-up" only for looking up data and "updating" for data updating as explained in Definition of Technical Terms. Hosts for executing the transactions are classified into "local site", a self-site, and "remote sites", other sites.

The "transcription" processor 14 performs the following procedures explained in Definition of Technical Terms in accordance with those site types: (a) local looking-up, (b) local updating and (c) remote updating.

### (6) Base-host Switching Processor 15

It is sometimes required to switch the base host for a lexicon set (only one base host being allowed to hold a lexicon set) to another host while the system is running at the base host that has been set by the system-configuration setting section 11 for each lexicon set. This could happen due to host malfunction in a network, maintenance or network failure.

Hosts connected to the network are (a) a host that is currently the base host (old base host), (b) a host to possibly become the base host (new base host) in place of the old host and (c) other hosts.

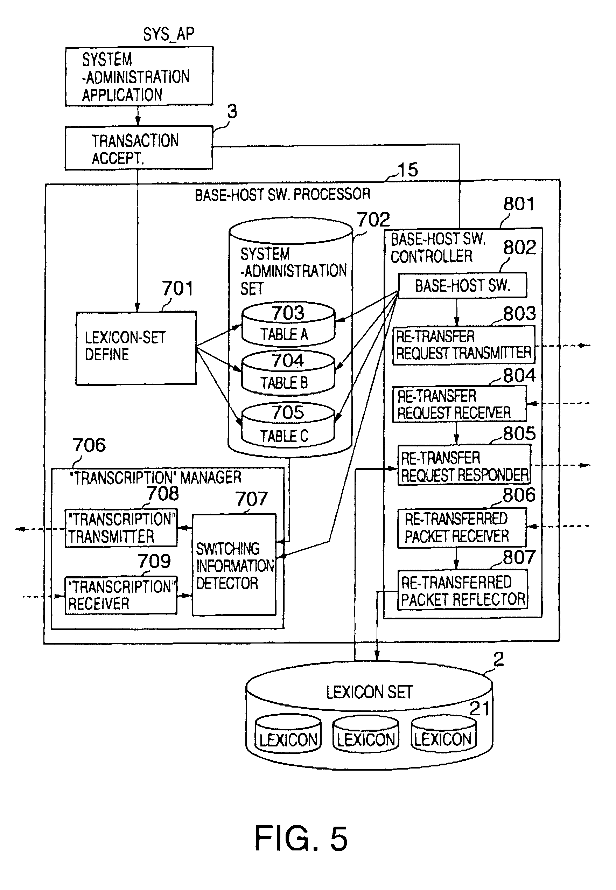

The base-host switching processor 15 performs procedures to those three types of hosts such as transmission of original data from the base host to the new base host or the other hosts by the function "transcription" and informing hosts of which host has become a new host after host-switching. The base-host switching processor 15 will be disclosed in detail later with reference to FIG. 5.

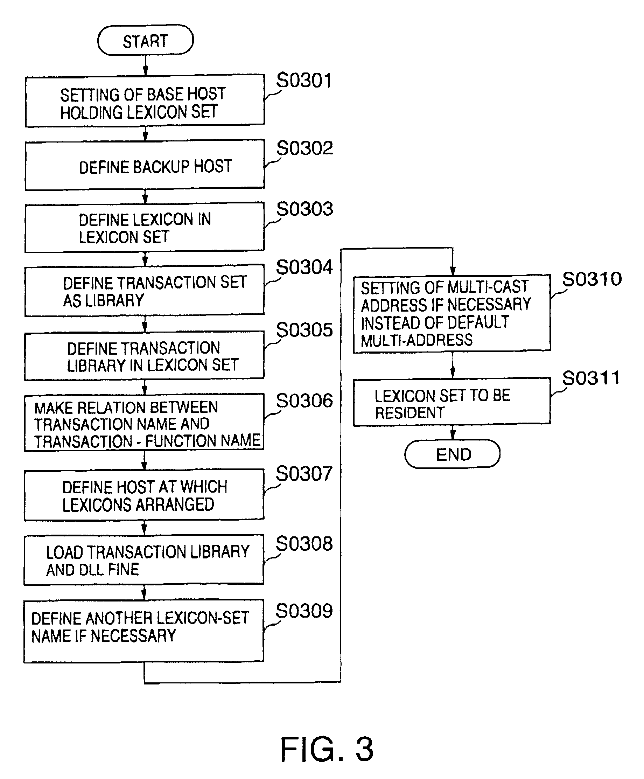

### [4. System-Configuration settings ... FIG. 3]

Several types of settings as explained below are available in the present invention for each host shown in FIG. 2. Such settings are performed when a data-management system-setting transaction requested by a system-administration accesses setting or processing sections.

The present system provides all of data related to data called lexicon sets and also transactions for processing these data in a main-memory area of each host. Therefore, several types of settings as explained below are performed under a requirement in that the main-memory area has been correctly initialized.

Several types of settings are performed to data provided in the initialized main-memory area to start the present system by using a specific system-administration.

Registration and execution of transactions are performed by using different types of applications. An application for system settings such as registration of transactions is called "system-administration application", and that for transaction-execution requests is called "user-executed application" in this embodiment.

### (1) Definition of Lexicon Set (S0301)

Users have to define lexicon sets decided at the time of designing. In detail, a transaction issued from the system-administration application is received by the transaction-accepting section 3. On receiving a command from the section 3, the base-host setting section 111 of the system-configuration setting section 11 shown in FIG. 2 appoints a host as the base host for holding a particular lexicon set (only one base host being allowed to hold a lexicon set).

The following example decides the name of a lexicon set to be defined in a main-memory area and which host among hosts in a network to be designated as the base (original) host holding the lexicon set to a main-memory area. For example, a lexicon set in the name of "SampleLexiconSet" is defined at the base host "host1", as follows:
DefineLexiconSet(&us,"SampleLexiconSet","host1");

This is just definition of a lexicon set and hence no instance for the lexicon-set data exists anywhere.

### (2) Definition of Backup Host (S0302)

Users can define one or more backup hosts for each lexicon set at the backup-host setting section 112 of the system-configuration setting section 11 with a requirement that at least one backup host exists while the system is running. It is also decided at the backup-host setting section 112 whether to make a backup file at each backup host.

For example, host 1 and host 2 are defined as backup hosts for SampleLexiconSet, with making a backup file at the host 1 but not at the host 2, as follows:
SetLexiconSetBackupHost (&us, "SampleLexiconSet","host1",T RUE);
SetLexiconSetBackupHost(&us,"SampleLexiconSet","host2",F ALSE);

### (3) Definition of Lexicon (S0303)

Next, the lexicon-defining section 113 defines lexicons in the lexicon set that has been defined as above, which belong to the lexicon set. Also defined is a type of each lexicon; single original or multi-original.

It is allowed to apply an updating procedure (cell/context formation, alteration, etc) to single-original-type lexicons at the base host for the lexicon set to which the single-original-type lexicons belong. The results of the updating procedure are transmitted to other hosts by the function "transcription" so that their lexicon sets can reflect the updating procedure.

In contrast, it is allowed to apply such updating procedure to the multi-original-type LEXICONS at every host, the updated results being not be allowed to be transmitted to other hosts. In other words, the updated results will remain at a local host.

For example, two lexicons "Lexicon1" and "Lexicon_2" are defined in "SampleLexiconSet", and "Lexicon1" and "Lexicon2" are defined as the single-original type and the multi-original type, respectively, as follows:
DefineLexiconInLexiconSet(&us,"SampleLexiconSet", "Lexiconl",SingleORG);
DefineLexiconInLexiconSet(&us,"SampleLexiconSet", "Lexicon2",MultiORG);

### (4) Definition of Transaction Library (S0304, S0305)

Transaction functions and transactions have a one-to-one correspondence in the present system. The transaction processor 12 defines a set of transactions as a library and registers the transaction library in a lexicon set.

For example, a transaction library "TRLIB" is defined in "SampleLexiconSet" in which the library consists of three transactions "tr1", "tr2" and "tr3", as follows:
char *TrNames[3]
TrNames[0]="tr1";TrNames[1]="tr2"; TrNames[2]="tr3";
DefineTransactionLibrary(&us,samplelexiconSet", "TRLIB",3,TrNames);

These are just definitions of transactions, hence no executable transactions exist.

### (5) Making of Relation between Transaction Names and Transaction-Function Names (S0306)

The transaction processor 12 makes a relation between transaction names and transaction-function names, and simultaneously, determines lexicons to be accessed by transactions and an access mode, the lexicons and the transactions related with each other being registered in a lexicon set.

The access mode is looking-up or updating. Transactions are only allowed to look up the contents of lexicons in the looking-up access mode, data updating being prohibited. On the contrary, transactions are allowed to look up and also update the contents of lexicons in the updating access mode.

For example, three transactions "tr1", "tr2" and "tr3" are made related (attached) to transaction functions "tr1a11", "tr2srh" and "tr3upd", respectively, in which "tr1" updates lexicons "lexicon1" and "lexicon2", "tr2" only looks up "lexicon1", and "tr3" updates "lexicon1" but only looks up "lexicon2", as follows:
char *lex[2];
int mode[2];
lex[0]="lexicon1"; lex[1]="lexicon2";
mode[0]=TRUE; mode[1]=TRUE;
AttachTransactionToFunction(&us,SampleLexiconSet","tr1", "tr1all,2,lex,mode);
lex[0]="Lexicon1";
mode[0]=FALSE;
AttachTransactionToFunction(&us,SampleLexiconSet", "tr2", "tr2srh,1,lex,mode);
lex[0]="Lexicon1"; lex[1]="Lexicon2";
mode[0]=TRUE; mode[1]=FALSE;
AttachTransactionToFunction(&us,SampleLexiconSet","tr3", "tr3upd,2,lex,mode);

This is just the relations between the transaction names and the transaction-function names having been made, hence no transactions executable.

### (6) Definition of Lexicon Arrangement (S0307)

The resident-data manager 13 defines hosts at which lexicons will be arranged. Arrangement of lexicons only required for transactions to run at each host mostly saves resources. Recommended is the same arrangement of lexicons over several hosts when their computers have enough capacity.

For example, an arrangement of lexicons "Lexicon1" and "Lexicon2" of a lexicon set "SampleLexiconSet" at a host "host1" is as follows:
DefineHostOfLexiconResidence(&us,"SampleLexiconSet","Lex icon1", "host1");
DefineHostofLexiconResidence(&us, "SampleLexiconSet","Lex icon2", "host1");

These are just definitions of hosts at which the lexicons will be arranged, no lexicon data being set or no main memory area being prepared for storing lexicon data. Such data arrangements and main-memory area settings will be done after the lexicon-set data have remained at the host.

### (7) Transaction Library and DLL-File Loading (S0308)

The transaction processor 12 makes a DLL file that is a library of transaction functions related to a transaction library and loads them onto a host that is holding lexicon sets while the present system is running at the host. Only the transactions that have been made related to transaction-function names are linked with transaction-function pointers at the time of loading.

The relations of all transactions to the transaction-function names are searched in the transaction library to find out the related transaction-function pointers by using the transaction-function names in the loaded DLL file, to link the transactions to the transaction-function pointers.

For example, a DLL file "c: ¥ gigabase ¥ trfunc.dll" is loaded onto a host "host1" for a transaction library "TRLIB" in which a file type is DLL, as follows:
LoadTransactionLibraryFile(&us,"SampleLexiconSet", "TRLIB","host1","c: ¥ gigabase ¥ trfunc.dll",DLL);

The transactions and the transaction-function pointers have been linked with each other at this stage. Execution of a transaction however requires the lexicon sets of the transaction to be executed being resident at a host for executing the transaction.

As disclosed above, the transaction functions have been loaded to the present system and relations of the transactions and the transaction functions have been made. Registration of the transactions to the present system as described above allows the transaction functions to run on the system, thus achieving operation of databases in the system.

### (8) Definition of another Lexicon-Set Name (S0309)

The transaction processor 12 can execute a transaction with assignment of another lexicon-set name when initiated by an application. Another lexicon-set name is defined as alias before execution of a transaction. For example, another name "ALIAS" is defined for a lexicon set "SamleLexiconSet", as follows:
DefineLexiconSetAlias(&us,"SampleLexiconSet","ALIAS";

Execution of a transaction initiated by an application can be done with "SampleLexiconSet" or "ALIAS". The system-administration application is, however, not allowed to use any another lexicon-set name.

### (9) Multi-Cast Address Settings (S0310)

Communications on user-defined lexicon sets without this setting is performed at a default multi-cast address that has been set using system-start parameters. Instead, multi-cast address settings by the multi-cast address setting section 114 of the system-configuration setting section 11 allows such communications at a multi-cast address different from the default multi-cast address.

Communications on lexicon-set data at the set multi-cast address requires resident lexicon-set data after the multi-cast address settings. A multi-cast address will, however, not be altered during data communications when lexicon-set data has already been resident at a host before the multi-cast address settings. The resident lexicon-set data is once released and made resident again for the set multi-cast address to be effective.

For example, a multi-cast address 232.122.32.93 is set for "SamleLexiconSet", as follows:
unsigned int maddr;
maddr=(232<<24)+(122<<16)+(32<<8)+93;
SetMulticastAddressForlexiconSet(&us,"SamleLexiconset",m addr);

### (11) Lexicon Set to be Resident (S0311)

The resident-data manager 13 stores lexicon sets at each host s so that the lexicon sets will remain there . Users are then allowed to load the data into a main-memory area for execution of transaction functions. This setting requires appointment of a host from which data is to be taken by the function "retriever". This appointed host is called a "retriever"-requested host.

The function of "retriever" for making lexicon sets resident at a host will not work while the present system is not running at the host, information on making the lexicon sets resident being just defined. The function "retriever" will work when the present system starts.

Lexicon-set data is taken by the function "retriever" when the present system has started. Once the function "retriever" for the lexicon-set data has been completed, a transaction that has been linked at this time is executable, and also a set multi-cast address is available. On starting of the function "retriever" for the lexicon-set, only lexicon-set for which arrangement has been defined at a host can be stored in the main-memory area.

Arrangement of a lexicon set "SampleLexiconSet" at a host "host1" from "retriever"-requested hosts "host2" and "host3" is as follows:
char *rethost[2];
rethost[0]= "host2"; rethost[1]= "host3";
LoadlexiconSetData(&us,"SampleLexiconSet","host1",2,reho st);

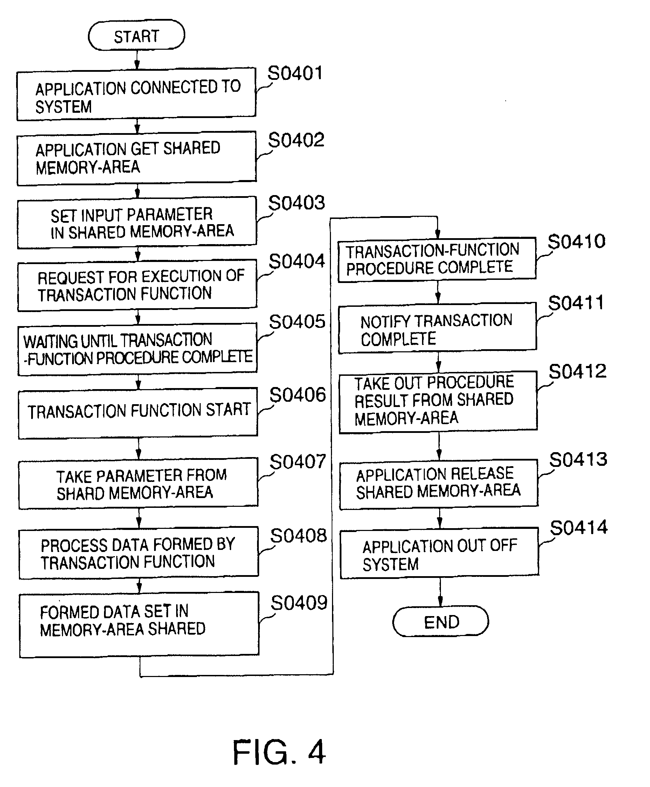

### [5. Application and Transaction Function Execution Procedure ... FIG. 4]

FIG. 4 shows flowcharts for calling a transaction function from an application.
(1) Initially, an application is connected to the present system (S0401).
(2) The application gets a shared memory-area for data communications with the present system (S0403).
(3) The application sets input parameters in the shared memory-area, which will be sent to a transaction function (S0403).
(4) The application sends a transaction-execution request to the present system (50404).
(5) The application enters a waiting mode until a transaction-function procedure is completed (S0405).
(6) On receiving the transaction-execution request, the present system starts the appointed transaction function (S0406). In detail, as shown in FIG. 4, when the application makes the transaction-execution request for a transaction corresponding to a procedure which is to be performed by the application, a transaction function having one-to-one correspondence with the transaction is selected and started.
(7) When the transaction function has stared, it takes out parameters, from the shared memory-area, necessary for the procedure to be performed by the application (S0407).
(8) The transaction function accesses a database for looking-up, searching, updating, deletion and addition, etc. The transaction-function procedure is then executed with the accessed data for forming necessary data for output (S0408). The transaction-function procedure is executed for the lexicons of a lexicon set already registered by the system-administration application.
(9) The transaction function sets the formed data in the shared memory-area (S0409).
(10) The transaction-function procedure is completed (S0411).
(11) On completion of the transaction-function procedure, the present system sends a transaction-completion notification to the application (S0411).
(12) On receiving the transaction-completion notification, the application takes out the results of the transaction-function procedure from the shared memory-area (S0412).
(13) The application releases the shared memory-area (S0413).
(14) The application cuts off the connection to the present system when the procedures have been completed and there is no requirement of accessing the present system (S0414).
(15) The application ends (END).

### [6. Execution of Looking-Up Transaction and Updating Transaction]

In execution of the transaction procedures as disclosed above, the present system performs the following different procedures described below in accordance with the types of transactions requested by the user application, or accessing the database such as looking-up, searching, updating, deletion and addition in step S0408 (FIG. 4).

### (1) Looking-Up Transaction

The transaction processor 12 executes this transaction to the lexicons to be accessed with no database updating. On completion of the looking-up transaction, the transaction processor 12 informs an application of the execution results. The looking-up transaction will only look up data with no updating, so that it can run at each site regardless of either original or replica data being remaining at the site.

### (2) Updating Transaction

The updating-transaction procedure depends on whether data stored at a host that requests this transaction is original or replica data.

For the original data, like the looking-up transaction, the transaction processor 12 executes this transaction to the lexicons to be accessed and informs an application of the execution results.

In contrast, the updating transaction cannot directly update lexicons for the replica data. The transaction processor 12 at a replica site sends a request to the counterpart processor 12 at a base host via a network for execution of the updating transaction. The base-host transaction processor 12 executes the updating transaction stored at the base host for original-data updating. The updated original data is transmitted to the replica sites by the function "transcription" so that replica-data can reflect changes in the original data due to updating. On completion this replica-data procedure, the updating transaction at each replica site informs the application of updated results.

### [7. Transaction Settings]

The following several types of system settings are required for running the present system, which are usually performed by a program called a system-administration application:
(1) lexicon-set names and the base host (candidates after host switching) for storing each lexicon set;
(2) lexicons included in the lexicon set;
(3) transaction libraries and transactions included in the libraries;
(4) transaction names and transaction functions for executing the transactions;
(5) lexicons to be accessed by each transaction and how to access (looking-up/updating);
(6) another name for a lexicon set, if necessary;
(7) multi-cast addresses for the function "transcription" to transmit lexicon sets to each host, if necessary;
(8) lexicon sets to be resident at each host;
(9) lexicons (included in the lexicon sets to be resident) to be set at each host;
(10) transaction libraries and their DLL-file names to be loaded to each host; and
(11) backup hosts for each lexicon set and file back-up necessary or not.

### [8. Base-Host Switching Processor 15]

### [8-1. Architecture of Base-Host Switching Processor 15 ... FIG. 5]

An embodiment of the base-host switching processor 15 will be disclosed with reference to a functional block shown in FIG. 5.

As disclosed in the architecture of each host with respect to FIG. 2, the base-host switching processor 15 performs switching from one host to another to play a role of a base host among several hosts in the network in a network in accordance with a data-management-system setting transaction requested from a system-administration application SYS_AP via the transaction-accepting section 3.

The base-host switching processor 15 is equipped with a lexicon-set defining section 701 for setting three types of data as system-administration information to be handled for base-host switching. The three types of data are a lexicon set, the base host for the lexicon set and the location (IP address) of the base host.

The three types of data are defined one by one by the base-host switching processor 15 for each lexicon set of a database to create a base-host data table 703 (TABLE A), a base-host-to-IP address table 704 (TABLE B) and a host-status table 705 (TABLE C), as shown below.

| (A) LEXICONSET-TO-BASE HOST DATA TABLE [for every machine] | | |
|---|---|---|
| LS NAME | BASE-HOST NAME | BASE-HOST IP ADDRESS |
| / | host a | 192. 168. 7. 4 |
| lexicon set A | host a | 192. 168. 7. 4 |
| lexicon set B | host b | 192. 168. 7. 23 |

| (B) LEXICONSET-TO-BASE-HOST IP ADDRESS TABLE [for every machine] | |
|---|---|
| LS NAME | BASE-HOST TP ADDRESS |
| / | 192. 168. 7. 4 |
| lexicon set A | 192. 168. 7. 4 |
| lexicon set B | 192. 168. 7. 23 |

| (C) SELF-HOST, BASE HOST FOR LEXICON SET OR NOT TABLE [per machine] | |
|---|---|
| L.S NAME | SELF IS BASE HOST OR NOT |
| / | ○ |
| lexicon set A | ○ |
| lexicon set B | X (at host_a) |

| LS NAME | SELF IS BASE HOST OR NOT |
|---|---|
| / | X |
| lexicon set A | X |
| lexicon set B | ○ (at host_b) |

The base-host data table 703 (TABLE A) indicates the relation among lexicon sets, the base host for each lexicon set and IP addresses of the base hosts. The base-host IP address table 704 (TABLE B) indicates the relation among lexicon sets and the IP address of the base host for each lexicon set. The host-status table 705 (TABLE C) indicates whether or not the self-host is the base host for each lexicon set. The tables 703 stored in all machines contain common contents. The tables 704 stored in all machines also contain common contents. The tables 705 stored in all machines are, however, not common.

The base-host data table 703 (TABLE A) and the base-host IP address table 704 (TABLE B) are shared by all machines in the network. Any modification to these tables is quickly informed to all machines with the function "transcription" so that every machine can reflect changes in the tables due to the modification. This is, however, not for base-host switching. In detail, modification to the table B is made temporarily without the function "transcription" to other hosts, asynchronous with modification to the table A.

The table B, a sub-set of the table A, is installed with the table A in installation of the present system. The data structure for the table B is different from that for the table A. In detail, data for the table B are formed with necessary data retrieved from the table A so that the IP address of a bast host can be quickly searched using a lexicon-set name.

The table C is also created from the table A. In detail, the self-host name is found on the table A. A lexicon set for which the self host is the base host is marked with the symbol "○" whereas those for which the self host is not the base host are marked with the symbol "x". The table C is thus different over several hosts, in other words, it cannot be shared by all machines.

The reasons for using the three types of tables are as follows:

The table A only is enough for the types of necessary data. The tables B and C are, however, still necessary because they are looked up whenever a data-administration setting transaction is executed. Hence, the tables B and C are created with a data structure available for quick searching.

The table A shared by all machines lists all necessary data such as host names and IP addresses. In contrast, the table B also shared by all machines lists IP address data only for quick searching for base-host IP address. The table C is prepared per machine for quick acknowledgement as to whether the self-host is a base or a replica host. This table is used for determining whether or not the self-host has to transfer a transaction to another host. When it is decided that the self-host is a replica host, the IP address of the base host for which the transaction should be transferred is searched on the table B. This achieves high-speed processing compared to looking up the table A only.

The system-administration data listed on the tables A to C are stored as a part of a system-administration lexicon set 702 (FIG. 5). On system startup, data on base hosts are transmitted to each host from the base host holding the system-administration lexicon set or a replica host holing a replica data of the data on base hosts with the function "retriever" so that the data on the base hosts can be shared by all hosts.

The base-host switching processor 15 in this embodiment is equipped with a base-host switching controller 801.

Provided in the base-host switching controller 801 are a base-host switch 802 and a re-transfer request transmitter 803. The base-host switch 802 switches the base host for a particular lexicon set from one host to another with modifications to the tables B and C, and also with modifications to the table A resident at the base host hblding the system-administration lexicon set just before completion of base-host switching. The re-transfer request transmitter 803 transmits a re-transfer request to the old base host for the particular lexicon set (and also other hosts). This is the request for re-transferring the latest version of lexicon set that is to be subjected to base-host switching when the self-host is the new base host.

Also provided in the base-host switching controller 801 are a re-transfer request receiver 804, a re-transfer request responder 805, a re-transferred packet receiver 806 and a re-transferred packet reflector 807. The re-transfer request receiver 804 (at the old base host) receives a re-transfer request sent from the new base host. The re-transfer request responder 805 (at the old base host) reads out the latest data of a lexicon set, the object of the re-transfer request, resident at the old base host and transmits it to the new base host. The re-transferred packet receiver 806 (at the new base host) receives a re-transferred packet sent from the old base host. The re-transferred packet reflector 807 (at the new base host) process the data resident at the new base host so that the data can reflect the contents of the re-transferred packet.

The base-host switching processor 15 is also equipped with a "transcription" manager 706. Provided in the "transcription" manager 706 are a switching information detector 707, a "transcription" transmitter 708 and a "transcription" receiver 709. The switching information detector 707 detects information on base-host switching performed by the base-host switch 802 of the base-host switching controller 801. The "transcription" transmitter 708 transmits the base-host switching information to other hosts with the function "transcription". The "transcription" receiver 709 receives base-host switching information sent from another host.

### [Operation of Embodiment]

The following procedures are carried out at each host having the base-host switching processor 15 in response to an execution request for the base-host setting transaction from the system-administration application SYS_AP.

It is sometimes required that the base host at which a particular lexicon set is resident is switched to another host as a new base host while the three types of tables explained above are resident at each machine. This may happen in case of troubles or maintenance to the old base host, network failure, etc.

Several host connected to the network are classified into three types: (1) a host that is the base host at present (old base host), (2) a host to become the base host next (new base host) and (3) hosts other than the two types of hosts (other hosts).

These three types of hosts acknowledge that the base host has been switched from one host to another at different timing. In detail, each machine is usually running while looking up the tables B and C whenever a transaction is executed to know which is the base host for a particular lexicon set and itself is the base host or not. In contrast, modification timing to the tables B and C in base-host switching are different over the three types of hosts. The table B is different from the other tables in that modification to the table B is temporarily inhibited from being transmitted to other hosts with the function "transcription" in base-host switching even though the table B is usually shared by all machines.

An operation at each host in base-host switching is disclosed according to which host is the host for executing a base-host switching transaction.

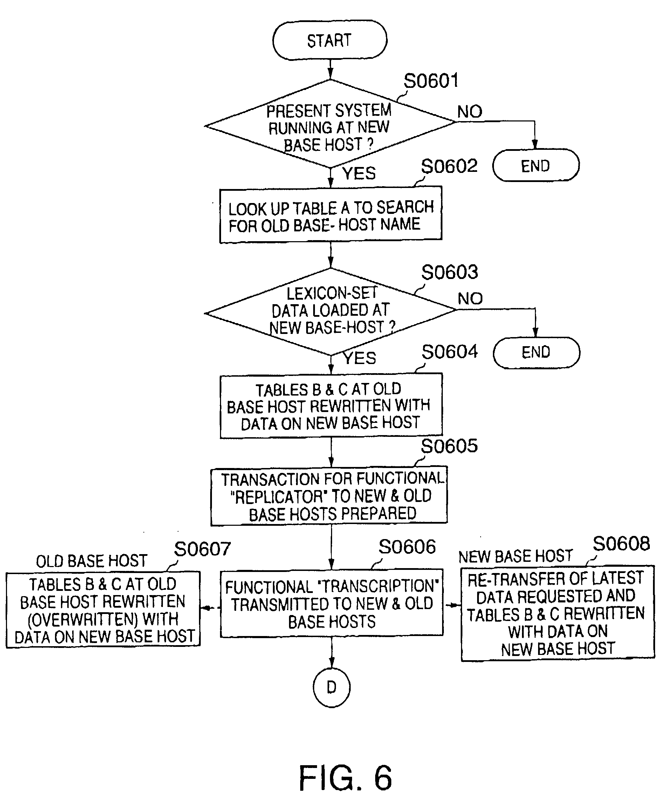

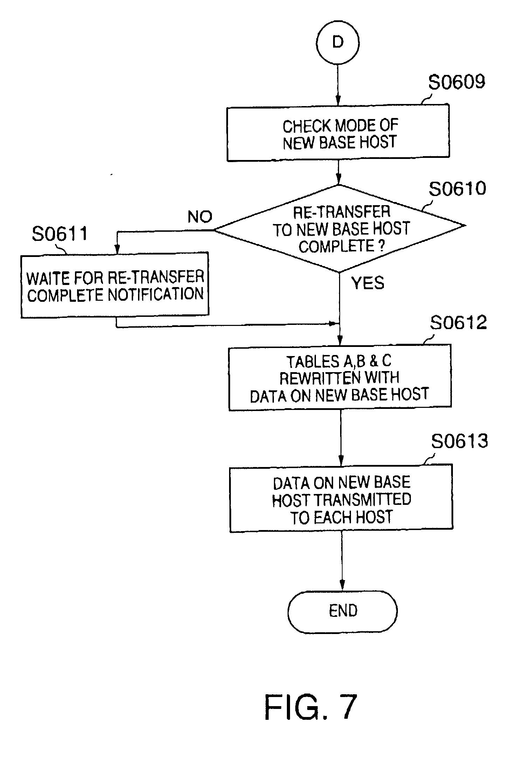

### [8-2-1. Base Host Holding System-Administration Lexicon Set is Function-Executing Host ... FIGS. 6, 7]

As shown in FIG. 5, the base host that is holding the system-administration lexicon set 702 is provided with the tables A, B and C. The tables A and B are created at the base host and transmitted to other hosts with the function "transcription" so that the identical tables may be resident at all hosts. Different from the tables A and B, the table C is created at each host, so that it is peculiar to each host.

Definition of each table are decided as follows: When a transaction for table definition has been issued by a system administrator via a system-administration program, it is received at the transaction-accepting section 3. The section 3 then operates the lexicon-set defining section 701 to write necessary data on each table. The contents of the tables A and B are transmitted to each host via the "transcription" manager 706 so that the identical tables A and also the identical tables B may be resident at all hosts. The table C is created at each host so that the contents become peculiar to each host.

The base-host switching controller 801 works as disclosed below when it receives a transaction for executing a base-host switching operation. This transaction includes data on the new and old hosts and is issued from the system-administration application program at the base host holding this admisnistration lexicon set.

The following is disclosed for switching the base host holding LexiconSet_B from a host_b (old base host) to a host_a (new base host).

The base-host switching controller 801 at the base host holding the system-administration lexicon set examines (S0601) whether the present system is running at the new base host (host_a). If not running (NO in S0601), the procedure ends because base-host switching is not possible. In contrast, if running (YES in S0601), the controller 801 looks up the table A (S0602) to search for the old base-host name (host_b).

The controller 801 further examines whether the lexicon-set data to be sent to the new base host has been loaded (S0603). If not loaded (NO in S0603), the procedure ends because the lexicon set will not be accessible after base-host switching. On the contrary, if loaded (YES in S0603), the base-host switch 802 at the base host holding the system-administration lexicon set rewrites the contents of the tables B and C at the old host with data on the new base host.

In this example, data on LexiconSet_B on the tables B and C at the host_b (old base host) are rewritten with data on the host_a (new base host). In detail, the IP address for LexiconSet_B on the table B is rewritten with the IP address 192.168.7.4 for the new base host host_a. In the table C in which the symbols "○" and "X" are used to indicate whether the self-host is a base host or not, LexiconSet_B on the table C is marked with "X" because the old base host host_b will not the base host for LexiconSet_B any longer.

Next, a transaction for performing functional "transcription" to the new and old hosts is prepared at the "transcription" manager 706 (S0605), the "transcription" transmitter 708 transmits the functional "transcription" to the new and old hosts (S0606). The functional "transcription" is to rewrite data on the tables B and C at the new and old base hosts with data on the new base host.

At the old base host host_b that has received the functional "transcription", the tables B and C are rewritten with data on the new host (S0607), or overwritten with the data because these tables have already been rewritten with the same data in step S0604.

At the new base host host_a that has also received the functional "transcription", the re-transfer request transmitter 803 sends a re-transfer request to the old base host for obtaining the latest data on LexiconSet_B that is to be subjected to base-host switching and rewrites own tables B and C with data on the new base host (S0608). The re-transfer request is made to check whether there is any packet not sent yet under the requirement that data to be subjected to base-host switching (LexiconSet_B in this example) at the new base host be updated to the latest one before the base host is switched from the old to the new host.

In detail, at the old base host (and other hosts), its latest data is transferred the new base host that has made the re-transfer request via the re-transfer request receiver 804 and the re-transfer request responder 805. At the new base host that has made the re-transfer request, re-transferred packets sent from the old base host (or other hosts) are received at the re-transferred packet receiver 806. And, new packets (that have not been received beforehand) are reflected on its user data (LexiconSet_B) so that the user data may be updated to the latest one.

During the re-transfer procedure at the new base host described above, the mode of the new base host is checked at the host at which the base-host switching transaction function has been executed (S0609), to examine whether the re-transfer operation from the old host to the new host has been completed (S0610).

If not completed (NO in S0610), the host that originated the base-host switching operation is enters in a waiting mode to wait for a re-transfer complete notification which will be sent from the new base host (S0611).

On the contrary, If completed (YES in S0610), the tables A, B and C at the host that originated the base-host switching operation are all rewritten with data on the new host (S0612). The data on the new host is transmitted to all hosts including the new and old hosts with the function "transcription" so that the tables at all hosts may become identical to each other (S0613), and the procedure ends.

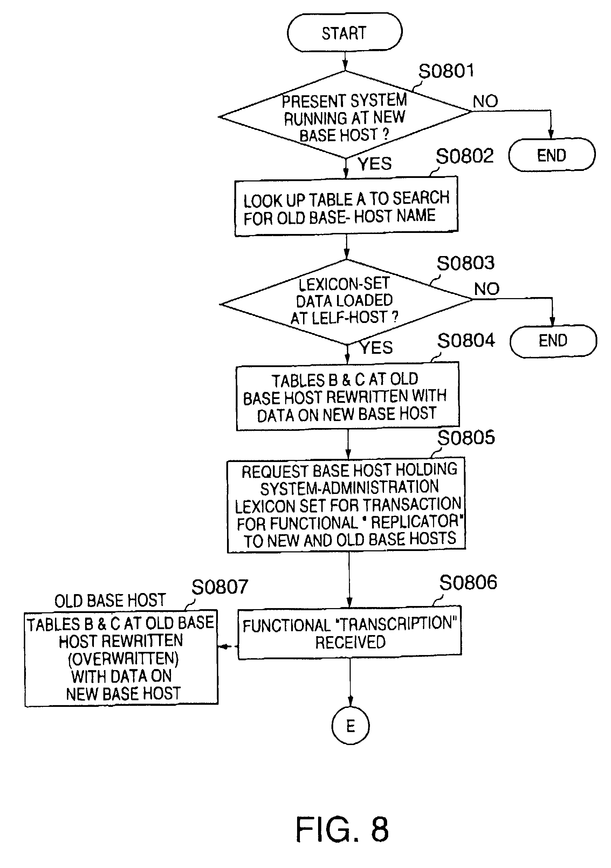

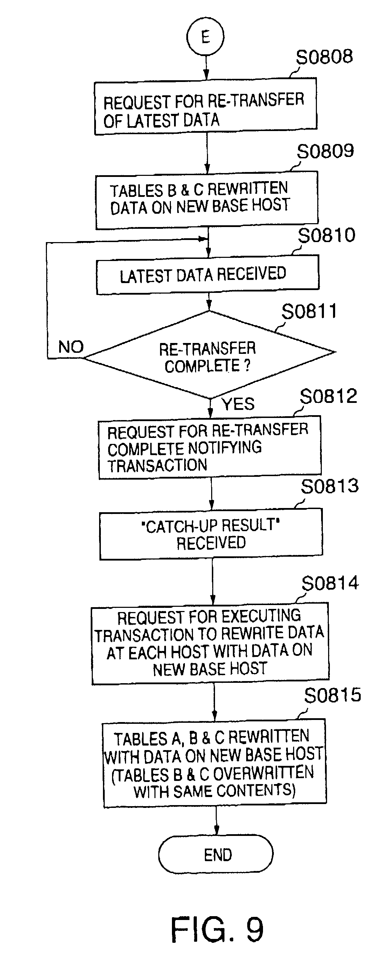

### [8-2-2. New Base Host is Function-Executing Host ... FIGS. 8, 9]

The following is also disclosed for switching the base host holding LexiconSet_B from a host_b (old base host) to a host_a (new base host).

The base-host switching controller 801 at the new base host (host_a) examines whether the present system is running at the new base host (S0801). The procedure ends if not running (NO in S0801). In contrast, if running (YES in S0801), the controller 801 looks up the table A (S0802) to search for the old base host name (host_b).

The controller 801 further examines whether the lexicon-set data to be subjected base-host switching has been loaded at the self-host (S0803). If not loaded (NO in S0803), the procedure ends because the lexicon set will not be accessible after base-host switching. On the contrary, if loaded at the new base host (YES in S0803), the base-host switch 802 at the new base host rewrites the contents of the tables B and C at the old host with data on the new base host (S0804).

Next, the new base host requests the base host holding the system-administration lexicon set for executing a transaction for performing functional "transcription" to the new and old hosts (S0805). In response to the request, the base host holding the system-administration lexicon set transmits the functional "transcription" to the new and old hosts (S0805).

When the requested functional "transcription" has been received at the new host host_a, the procedure is executed at step S0808 and the succeeding steps that correspond to step S0608 and the succeeding steps in FIG. 6.

At the old base host host_b that has received the functional "transcription", the tables B and C are rewritten with data on the new host (S0807), or overwritten with the data because these tables have already been rewritten with the same data in step S0804.

At the new base host host_a that has also received the functional "transcription", the re-transfer request transmitter 803 sends a re-transfer request to the old base host for obtaining the latest data on LexiconSet_B that is to be subjected to base-host switching (S0808) and rewrites own tables B and C with data on the new base host (S0809). The re-transfer request is made to check whether there is any packet not sent yet under the requirement that data to be subjected to base-host switching (LexiconSet_B in this example) at the new base host be updated to the latest one before the base host is switched from the old to the new host.

In detail, at the old base host, its latest data is transferred the new base host that has made the re-transfer request via the re-transfer request receiver 804 and the re-transfer request responder 805. At the new base host that has made the re-transfer request, re-transferred packets sent from the old base host are received at the re-transferred packet receiver 806. And, new packets (that have not been received beforehand) are reflected on its user data (LexiconSet_B) so that the user data may be updated to the latest one (S810).

When the latest user data has been re-transferred from the old host to the new host (YES in S0811), the new host requests the base host holding the system-administration lexicon set for executing a re-transfer complete notifying transaction (S0812). This request is made to inform the base host holding the system-administration lexicon set of the fact that the latest version of user data (lexiconSet_B) has been stored at the new base host.

On receiving the request, the base host holding the system-administration lexicon set executes the re-transfer complete notifying transaction so that the re-transfer complete notification (catch up result) may be transmitted to all hosts with the function "transcription".

On receiving the notification (S0813), the new host further requests the base host holding the system-administration lexicon set for executing a transaction to rewrite data at each host with data on the new base host (S0814).

Under this rewriting transaction, the tables A, B and C at the base host holding the system-administration lexicon set are rewritten, and also a command is transmitted to all hosts including the new and old hosts for rewriting the contents of the tables A, B and C with data on the new base host with the function "transcription".

The contents of the tables A, B and C are then rewritten with the data on the new base host under the function "transcription" (S0815). At the new and old hosts, the table A is added new data whereas the tables B and C are overwritten with the respective same contents because these tables have already been rewritten.

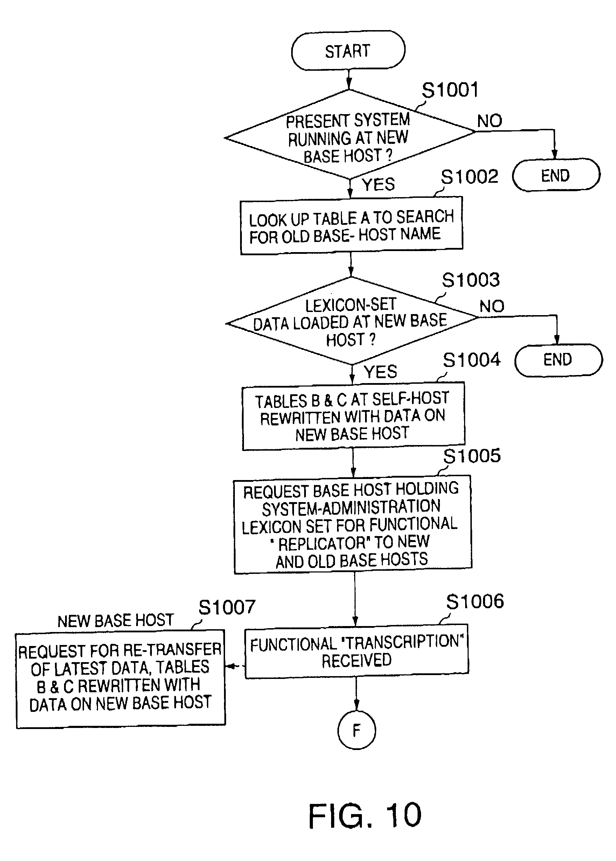

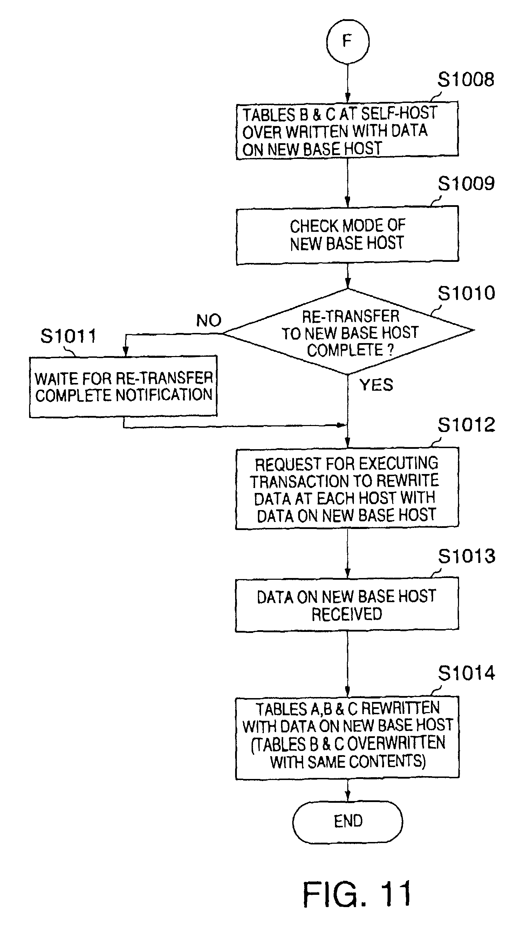

### [8-2-3. Old Base Host is Function-Executing Host ... FIGS. 10, 11]

The following is also disclosed for switching the base host holding LexiconSet_B from a host_b (old base host) to a host_a (new base host).

The base-host switching controller 801 at the old base host (host_b) examines (S1001) whether the present system is running at the new base host host_a. The procedure ends if not running (NO in S1001). In contrast, if running (YES in S1001), the controller 801 looks up the table A (S1002) to search for the old base-host name (host_b).

The controller 801 further examines (S1003) whether the lexicon-set data to be subjected base-host switching has been loaded at the new base host. If not loaded (NO in 51003), the procedure ends because the lexicon set will not be accessible after base-host switching. On the contrary, if loaded at the new base host (YES in S1003), the base-host switch 802 at the old base host that originated the transaction function rewrites the contents of the tables B and C at the old base host with data on the new base host (S1004).

Next, the old base host requests the base host holding the system-administration lexicon set for executing a transaction for performing functional "transcription" to the new and old hosts (S1005). In response to the request, the base host holding the system- administration lexicon set transmits the functional "transcription" to the new and old hosts.

When the requested functional "transcription" has been received at the old base host, the procedure is executed at step S1008 that corresponds to step S0607 and the succeeding steps (FIG. 6), which will be disclosed later.

At the new base host host_a that has also received the functional "transcription", the re-transfer request transmitter 803 sends a re-transfer request to the old base host for obtaining the latest data on LexiconSet_B that is subjected to base-host switching and rewrites own tables B and C with data on the new base host (S1007). The re-transfer request is made to check whether there is any packet not sent yet under the requirement that data to be subjected to base-host switching (LexiconSet_B in this example) at the new base host be updated to the latest one before a base host is switched from the old to the new host.

In detail, at the old base host (and other hosts), its latest data is transferred to the new base host that has made the re-transfer request via the re-transfer request receiver 804 and the re-transfer request responder 805. At the new base host that has made the re-transfer request, re-transferred packets sent from the old base host (or other hosts) are received at the re-transferred packet receiver 806. And, new packets (that have not been received beforehand) are added to its user data (LexiconSet_B) so that the user data may be updated to the latest one.

At the old base host host_b that has received the functional "transcription" in step S1006, the tables B and C are rewritten with data on the new host (S1008), or overwritten with the data because these tables have already been rewritten with the same data in step S1004.

The mode of the new base host is checked (S1009), and it is examined whether the re-transfer operation at the new host has been completed (S1010). If not completed (NO in S1010), the old base enters in a waiting mode to wait for a re-transfer complete notification (S1011). On the contrary, if completed (YES in S1010), the old base host requests the base host holding the system-administration lexicon set for executing a transaction to rewrite data on each host with data on the new base host (S1012).

This rewriting transaction is the same as that disclosed in [8-2-2. New Base Host is Function-Executing Host. In detail, under this rewriting transaction, the tables A, B and C at the base host holding the system-administration lexicon set are rewritten, and also a command is transmitted to all hosts including the new and old hosts for rewriting the contents of the tables A, B and C with data on the new base host with the function "transcription".

The contents of the tables A, B and C at all hosts are then rewritten with the data on the new base host under the function "transcription" (S1014). At the new and old hosts, the table A is added new data whereas the tables B and C are overwritten with the respective same contents because these tables have already been rewritten.

### [8-3. Advantages in Embodiment]

The embodiment disclosed above has the following advantages:
(1) Network-Used Enhanced Reliabilities
   The functional features of the present invention lie in redundant function and data-recovery function. These functions achieve quick system-recovery procedures in the event of troubles at a machine holding original data, in which the base host holding the original data is switched to another host and the latest version of the data are stored at the new base host.
(2) Functional alteration with no System Halt
   The base-host switching processor 15 in this embodiment can proceed with the base-host switching operation from one host to another on particular data with no system halt, thus the present invention achieving easy system-setting alteration procedures.
(3) The distributed network system provided with the base-host switching processor 15 in this embodiment allows application software being independent of computer hardware, with the remote/local architecture independent of the system hardware. The system physical architecture or hardware physical architecture is thus not an issue for the application software. It is also not an issue for the application to know at which computer data is stored, whether data are matched over several computers, etc. System engineers can thus devote themselves to design and installation of application logics for high productivity in system development.
(4) The system-administration data to be looked up in base-host switching is shared by all hosts in the network. The base-host switching is performed with modification to the system-administration data at the base host holding this data, the old base host or the new base host. The system-administration data rewritten with data on the new host is transmitted to all hosts in the network with the function "transcription", thus data being matched all time in the present system.
(5) The system-administration data initial settings are performed at the base host holding the system-administration data. This allows each host to identify itself as the base host for a particular data at system startup under the initial settings.

### [9. Modifications]

(1) A particular computer may not be designated as the base host for holding the system-administration lexicon set. In other words, the system- administration application may be set at each host so that an authorized system administrator can alter the system-administration lexicon set from any host. This modification allows transmission of an updated system-administration lexicon set to a running host with the function "transcription" and thereafter to other hosts that have started with the function "retriever". It is thus achieved that a host selected by the administrator in accordance with the system condition is designated as the base host for holing the system-administration lexicon set.
(2) In the embodiment, several settings for the system-administration data that are looked up in base-host switching are preformed in accordance with system-setting-use transactions issued from the system-administration application, each transaction being executed by calling transaction functions. Instead, the transactions may be executed in such a way that the present system interprets and executes data-operation procedure stated in each transaction under a specific protocol.
(3) The embodiment is disclosed with "several machines" which are physically different machines and the communications network which is a communications means for the machines, including physical media. Not only that, the "several machines" may be logically different machines such as different processes in a machine, with different means (process ID, etc) of distinguishing the logically different machines from each other. The present system can manage one or more of databases (lexicon sets).
(4) The communications network for transmitting data by the function "transcription" and that for transferring transactions may be physically/logically the same or different from each other. A multi-cast/broadcast network is efficient for data transmission over a lot of replica hosts . The present invention is, however, not limited to such network. Transaction transfer is usually performed by one-to-one communications. The multi-cast/broadcast network may also be used for such transfer under the requirements that transactions received by sites that are not allowed to execute the transactions be deleted or not be executed under determination of such sites.

As disclosed above, the present offers a base-host switching database management system with easy system construction and high flexibility to functional modifications.

Moreover, the present offers a database management system with precise management of identical data stored in main-memory areas of several machines connected via a network, and also a base-host switching database management system with easy execution of several types of settings at this management system.

Additional advantages and modifications will readily occur to those skilled in the art. Therefore, the invention in its broader aspects is not limited to the specific details and representative embodiments shown and described herein. Accordingly, various modifications may be made without departing from the sprit or scope of the general inventive concept as defined by the appended claims and their equivalents.

## Claims

1. A database-management system comprising at least two computers connected via a network, the computers having main-memory areas storing databases, each database having at least a piece of data, either of the computers being designated as an original host for storing the original of the data, the other computer being designated as a replica host for storing replica of the data, each computer including:
a definer configured to define system-administration information on at least a piece of data to be subjected to base-host switching, a base host storing the data, and the location of the base host;
a storage configured to store the system-administration information;
a base-switching controller configured to control the base-host switching based on the system-administration information; and
a transcription manager configured to perform communications on information on the base-host switching among the computers.

2. The database-management system according to claim 1, wherein the base-switching controller includes:
an alterer configured to alter the system-administration information;
a re-transfer request transmitter configured to transmit a re-transfer request to a former base host and other hosts, for the latest data to be subjected to the base-host switching;
a re-transfer request receiver configured to receive the re-transfer request transmitted by a new base host;
a re-transfer request responder configured to transmit at least one re-transfer packet on the latest data to be subjected to the base-host switching to the new base host, responsive to the received re-transfer request;
a re-transfer packet receiver configured to receive the re-transfer packet transmitted from a computer that has received the re-transfer request; and
a re-transfer packet reflector configured to reflect the received re-transfer request on the data to be subjected to the base-host switching.

3. The database-management system according to claim 1 or 2,
wherein the system-administration information includes a base-host list that lists at least one lexicon set, and a base-host name and the location of the base host corresponding to the lexicon set, a base-host address list that lists the lexicon set and the location of the base host storing the lexicon set, and a host status list that indicates as to whether each computer is the base host, the base-host list and the base-host address list being shared by all computers connected via the network whereas the host status list being peculiar to each computer.

4. The database-management system according to claim 1, 2 or 3
wherein alteration made to any one of the computers connected via the network is informed to all computers connected via the network.

5. A database-management method for managing databases provided for at least two computers connected via a network, the computers having main-memory areas storing databases, each database having at least a piece of data, the method comprising:
designating either of the computers as an original host for storing the original of the data;
designating the other computer as a replica host for storing replica of the data;
defining system-administration information on at least a piece of data to be subjected to base-host switching, a base host for the data, and the location of the base host; and
switching the base host storing the data to be subjected to base-host switching to another computer.

6. The database-management method according to claim 5, wherein, when a base host storing a system-administration lexicon set having the system-administration information has made a request for base-host switching, further comprising:
rewriting system-administration information resident at a former base host with data on a new base host;
transmitting a re-transfer request from the new base host to another host for receiving the latest data to be subjected to the base-host switching;
rewriting system-administration information resident at the new base host with the data on the new base host; and
transmitting the rewritten system-administration information to all computers connected via the network on completion of re-transfer of the latest data to be subjected to the base-host switching to the new base host.

7. The database-management method according to claim 5, wherein, when a base host making a request for base-host switching is the new base host, further comprising:
rewriting system-administration information resident at a former base host with data on a new base host;
requesting a base host storing a system-administration lexicon set for a transcription procedure;
transmitting a re-transfer request to another computer for receiving the latest data to be subjected to the base-host switching;
rewriting system-administration information resident at the base host storing the data to be subjected to the base-host switching with the data on the new base host; and
rewriting system-administration information resident all computers connected via the network with the data on the new base host by the base host storing the system-administration lexicon set through the transcription procedure on completion of re-transfer of the latest data to be subjected to the base-host switching to the new base host.

8. The data-management method according to claim 5, wherein, when a base host making a request for base-host switching is the base host storing the data to be subjected to the base-host switching, further comprising:
rewriting system-administration information resident at the base host storing the data to be subjected to the base-host switching with data on a new base host;
requesting a base host storing a system-administration lexicon set for a transcription procedure;
transmitting a re-transfer request to the new base host for receiving the latest data to be subjected to the base-host switching;
rewriting system-administration information resident at the new base host with the data on the new base host; and
rewriting system-administration information resident all computers connected via the network with the data on the new base host by the base host storing the system-administration lexicon set through the transcription procedure on completion of re-transfer of the latest data to be subjected to the base-host switching to the new base host.

9. The data-management method according to claim 5 further comprising:
forming a base-host list that lists at least one lexicon set, and a base-host name and the location of the base host corresponding to the lexicon set;
forming a base-host address list that lists the lexicon set and the location of the base host storing the lexicon set;
forming a host status list that indicates as to whether each host is the base host; and
forming the base-host list and the base-host address list as being shared by all computers connected via the network whereas the host status list as being peculiar to each host.

10. A computer readable medium containing a database-management program for managing database for at least two computers connected via a network for database management, the computers having main-memory areas storing databases, each database having at least a piece of data, either of the computers being designated as an original host for storing the original of the data, the other computer being designated as a replica host for storing replica of the data, information on data updating performed at the original host being reflected on the replica host to maintain data equivalence over the computers, the program having instructions for:
defining system-administration information on at least a piece of data to be subjected to base-host switching, a base host for the data, and the location of the base host; and
switching the base host storing the data to be subjected to base-host switching to another computer.

11. The computer readable medium according to claim 10, wherein, when a base host storing a system-administration lexicon set having the system-administration information has made a request for base-host switching, further having instructions for:
rewriting system-administration information resident at a former base host with data on a new base host;
transmitting a re-transfer request from the new base host to another host for receiving the latest data to be subjected to the base-host switching;
rewriting system-administration information resident at the new base host with the data on the new base host; and
transmitting the rewritten system-administration information to all computers connected via the network on completion of re-transfer of the latest data to be subjected to the base-host switching to the new base host.

12. The computer readable medium according to claim 10, wherein, when a base host making a request for base-host switching is the new base host, further having instructions for:
rewriting system-administration information resident at a former base host with data on a new base host;
requesting a base host storing a system-administration lexicon set for a transcription procedure;
transmitting a re-transfer request to another computer for receiving the latest data to be subjected to the base-host switching;
rewriting system-administration information resident at the base host storing the data to be subjected to the base-host switching with the data on the new base host; and
rewriting system-administration information resident all computers connected via the network with the data on the new base host by the base host storing the system-administration lexicon set through the transcription procedure on completion of re-transfer of the latest data to be subjected to the base-host switching to the new base host.

13. The computer readable medium according to claim 10, wherein, when the a base host making a request for base-host switching is the base host storing the data to be subjected to the base-host switching, further having instructions for:
rewriting system-administration information resident at the base host storing the data to be subjected to the base-host switching with data on a new base host;
requesting a base host storing a system-administration lexicon set for a transcription procedure;
transmitting a re-transfer request to the new base host for receiving the latest data to be subjected to the base-host switching;
rewriting system-administration information resident at the new base host with the data on the new base host; and
rewriting system-administration information resident all computers connected via the network with the data on the new base host by the base host storing the system-administration lexicon set through the transcription procedure on completion of re-transfer of the latest data to be subjected to the base-host switching to the new base host.

14. The computer readable medium according to claim 10 further having instructions for:
forming a base-host list that lists at least one lexicon set, and a base-host name and the location of the base host corresponding to the lexicon set;
forming a base-host address list that lists the lexicon set and the location of the base host storing the lexicon set;
forming a host status list that indicates as to whether each host is the base host; and
forming the base-host list and the base-host address list as being shared by all computers connected via the network whereas the host status list as being peculiar to each host.

15. A carrier medium carrying computer readable instructions for controlling a computer to carry out the method of any one claims 5 to 9.
